(19)

Europäisches
Patentamt
European
Patent Office
Office européen
des brevets

(11) **EP 3 284 777 A1**

(12) **EUROPEAN PATENT APPLICATION**
published in accordance with Art. 153(4) EPC

(43) Date of publication:
**21.02.2018 Bulletin 2018/08**

(21) Application number: **16780119.0**

(22) Date of filing: **14.04.2016**

(51) Int Cl.:
*C08J 5/18* (2006.01)          *H01G 4/18* (2006.01)
*C08L 23/16* (2006.01)

(86) International application number:
**PCT/JP2016/062038**

(87) International publication number:
**WO 2016/167328 (20.10.2016 Gazette 2016/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **15.04.2015 JP 2015083639**

(71) Applicant: **Oji Holdings Corporation
Chuo-ku
Tokyo 104-0061 (JP)**

(72) Inventors:
• **YODA, Masahiro**
  **Tokyo 104-0061 (JP)**
• **ISHIDA, Tatsuji**
  **Tokyo 104-0061 (JP)**
• **ISHIWATA, Tadakazu**
  **Tokyo 104-0061 (JP)**
• **NAKATA, Masahiro**
  **Tokyo 104-0061 (JP)**

(74) Representative: **Müller-Boré & Partner
Patentanwälte PartG mbB
Friedenheimer Brücke 21
80639 München (DE)**

(54) **BIAXIALLY STRETCHED POLYPROPYLENE FILM FOR CAPACITOR**

(57)     A chief object is to provide a biaxially stretched polypropylene film for capacitors that is excellent in dielectric breakdown resistance at high temperatures and that can be formed into an ultra-thin film. This relates to a biaxially stretched polypropylene film for capacitors that contains a polypropylene resin having ethylene units, wherein the content of the ethylene units is 7.5 mol% or less based on the total amount of propylene units and ethylene units detected from the film.

EP 3 284 777 A1

**Description**

Technical Field

The present invention relates to a biaxially stretched polypropylene film for capacitors.

Background Art

Biaxially stretched polypropylene films have excellent electrical properties, such as voltage resistance and low dielectric loss, and high moisture resistance. With these advantageous properties, biaxially stretched polypropylene films have been suitably used as dielectric films for capacitors, such as high-voltage capacitors, filter capacitors for various switching power supplies, converters, and inverters, and smoothing capacitors in electric and electronic devices. Polypropylene films are also beginning to be applied as capacitors for inverter power supplies for controlling drive motors of, for example, electric cars, and hybrid cars, for which there has been a growing demand.

Among the applications described above, capacitors used in cars are always exposed to high temperatures, and are thus required to stably function as capacitors at high temperatures without causing dielectric breakdown.

To obtain such capacitors, the biaxially stretched polypropylene film for use must have voltage resistance in a high temperature range. Thus, films have been developed for use in capacitors by blending propylene with other polymers. Patent Literature 1, for example, discloses a resin formed by blending a polypropylene resin with polymethylpentene. Patent Literature 2 to 4 disclose the use of a resin formed by blending a polypropylene resin with a 4-methyl-1-pentene copolymer. Additionally, for example, a copolymer of propylene with $\alpha$-olefin as a starting material for capacitor films is also reported (Patent Literature 5).

Citation List

Patent Literature

    Patent Literature 1: JPH09-270361A
    Patent Literature 2: JP2014-11181A
    Patent Literature 3: JP2014-11182A
    Patent Literature 4: JP2014-11183A
    Patent Literature 5: JP2006-229208A
    Patent Literature 6: JPS59-135209A
    Patent Literature 7: JP2002-128825A

Summary of Invention

Technical Problem

The problem with dielectric breakdown occurring when a high voltage is applied at a high temperature, however, has not been sufficiently solved with any of the polypropylene resins.

It is also necessary to form a thin polypropylene film in order to further reduce the size and weight of capacitors. Thus, polypropylene films excellent in, for example, stretchability and film formability are required.

In view of the current status, because of the excellent stretchability of ethylene-propylene copolymers obtained by copolymerizing propylene with ethylene (e.g., Patent Literature 6 and 7), the use of the copolymers as a starting material for biaxially stretched films for capacitors is expected to enhance the film formability and stretchability.

Ethylene-propylene copolymers, however, typically have a lower melting point than propylene homopolymers, and their crystallization temperature is thus lowered. Materials of this sort are prone to significant deterioration of the dielectric breakdown strength at high temperatures. Patent Literature 5 actually points out the problem that copolymerization of ethylene and propylene is "likely to result in decreases in voltage resistance at high temperatures," and there has been little research on the use of ethylene-propylene copolymers as a starting material for capacitor films.

A chief object of the present invention is to provide a biaxially stretched polypropylene film for capacitors that is excellent in dielectric breakdown resistance at high temperatures (e.g., 100°C or more) and that can be formed into an ultra-thin film.

Solution to Problem

To solve the problem described above, the present inventors conducted extensive research on ethylene-propylene copolymers that are excellent in stretchability and mechanical strength but exhibit decreases in dielectric breakdown resistance at high temperatures, which are caused by delayed crystallization of the molten resin of starting material resin pellets because of their low melting point. The inventors then found that the use of a polypropylene resin with a specific content of ethylene units not only imparts film formability and stretchability as in the prior art, but also maintains the high melting heat amount of the obtained biaxially stretched film, thereby remarkably enhancing the voltage resistance, contrary to earlier findings in the art. The present invention was completed on the basis of these findings.

Item 1. A biaxially stretched polypropylene film for capacitors, comprising a polypropylene resin having ethylene units,

the content of the ethylene units being 7.5 mol% or less based on the total amount of propylene units and ethylene units detected from the film.

Item 2. The biaxially stretched polypropylene film for capacitors according to Item 1,
wherein the polypropylene resin contains an ethylene-propylene copolymer, and
the ethylene-propylene copolymer has a weight average molecular weight (Mw) of 250,000 or more and 800,000 or less.

Item 3. The biaxially stretched polypropylene film for capacitors according to Item 2, wherein the content ratio of the ethylene-propylene copolymer is 5 mass% or more and 50 mass% or less in the polypropylene resin.

Item 4. The biaxially stretched polypropylene film for capacitors according to Item 2 or 3, wherein the ethylene-propylene copolymer has a melting point of 110°C or more and 170°C or less.

Item 5. The biaxially stretched polypropylene film for capacitors according to any one of Items 2 to 4, wherein the ethylene-propylene copolymer has a crystallization temperature of 85°C or more and 110°C or less.

Item 6. The biaxially stretched polypropylene film for capacitors according to any one of Items 1 to 5, wherein the polypropylene film has a melting heat amount of 90 J/g or more.

Item 7. The biaxially stretched polypropylene film for capacitors according to any one of Items 1 to 6, wherein the polypropylene film has a crystallite size of 10.0 nm or more and 16.3 nm or less as determined by the Scherrer's equation from the half width of the reflection peak from (040) plane of $\alpha$-crystal measured by a wide angle X-ray diffraction method.

Item 8. The biaxially stretched polypropylene film for capacitors according to any one of Items 1 to 7, wherein the biaxially stretched polypropylene film comprises a metal film on one side or both sides thereof.

Item 9. A capacitor obtained using the biaxially stretched polypropylene film for capacitors according to any one of Items 1 to 8.

Item 10. A method for producing a biaxially stretched polypropylene film for capacitors, the method comprising

step (A) of melting and molding a polypropylene resin to obtain a cast sheet of the polypropylene resin, and
step (B) of biaxially stretching the obtained cast sheet,

wherein the polypropylene resin comprises ethylene units, and the content of the ethylene units is 7.5 mol% or less based on the total amount of propylene units and ethylene units detected from the film.

Item 11. The production method according to Item 10, wherein the polypropylene resin in step (A) comprises an ethylene-propylene copolymer.

Item 12. Use of a biaxially stretched polypropylene film comprising a polypropylene resin having ethylene units in capacitors, wherein the content of the ethylene units is 7.5 mol% or less based on the total amount of propylene units and ethylene units detected from the film.

Item 13. A method for using a biaxially stretched polypropylene film comprising a polypropylene resin having ethylene units in capacitors, wherein the content of the ethylene units is 7.5 mol% or less based on the total amount of propylene units and ethylene units detected from the film.

Advantageous Effects of Invention

The biaxially stretched polypropylene film for capacitors of the present invention even has excellent dielectric breakdown resistance at high temperatures.

The biaxially stretched polypropylene film for capacitors of the present invention can be formed into a thin film, and is expected to reduce the size and weight of the capacitor obtained.

Thus, a capacitor comprising the biaxially stretched polypropylene film for capacitors of the present invention shows promise for suitable use as a high-capacity capacitor to which high voltages are applied at high temperatures.

Description of Embodiments

The biaxially stretched polypropylene film for capacitors of the present invention contains a polypropylene resin having ethylene units. The biaxially stretched polypropylene film for capacitors of the present invention will be described in detail below. Hereinafter, the biaxially stretched polypropylene film for capacitors of the present invention may be simply referred to as the "polypropylene film of the present invention."

Polypropylene Resin

The polypropylene resin for use in forming the biaxially stretched polypropylene film for capacitors of the present invention has ethylene units. For this polypropylene resin, an ethylene-propylene copolymer having ethylene units may be used singly, or a blended resin containing (1) a propylene homopolymer and (2) an ethylene-propylene copolymer as described below may be used. The resin component constituting the biaxially stretched polypropylene film for capacitors of the present invention is preferably a combination of two types of resin components, i.e., (1) the propylene homopolymer and (2) the ethylene-propylene copolymer mentioned above.
The content of the ethylene units in the polypropylene resin is 7.5 mol% or less, preferably 7 mol% or less, and more preferably 6 mol% or less, based on the total amount of propylene units and ethylene units detected from the film. The content of the ethylene units in the polypropylene resin exceeding 7.5 mol% notably lowers the melting point of the obtained film, likely leading to decreases in the voltage resistance of the film at high temperatures. Even a very small content of the ethylene units in the polypropylene resin can provide a polypropylene film excellent in dielectric breakdown resistance. Specifically, the lower limit of the content of the ethylene units is preferably more than zero, more preferably 0.0001 mol%, even more preferably 0.0005 mol%, further more preferably 0.001 mol%, and yet further more preferably 0.005 mol%. The content of the ethylene units is also preferably 4 mol% or less, more preferably 3 mol% or less, even more preferably 2 mol% or less, further more preferably 1 mol% or less, yet further more preferably 0.5 mol% or less, and particularly preferably 0.09 mol% or less. In these cases, the haze of the biaxially stretched polypropylene film for capacitors falls within a desirable range, and the element-winding processability is likely to become excellent, with the dielectric breakdown resistance being likely to further improve.

Propylene Homopolymer

When the polypropylene resin is a blended resin of a propylene homopolymer and a propylene-ethylene copolymer, the propylene homopolymer for use may be one single type of propylene homopolymer or those obtained by combining two or more types of propylene homopolymers, as long as the propylene homopolymer for use has the physical properties described below.
The weight average molecular weight (Mw) of the propylene homopolymer is preferably 250,000 or more and 450,000 or less. The use of a polypropylene resin with such a weight average molecular weight (Mw) can provide resin flowability suitable for biaxial stretching, and facilitates the control of the thickness of a cast sheet (extruded sheet). The use of a polypropylene resin with such a weight average molecular weight (Mw) is preferred, for example, because it becomes easy to obtain an ultra-thin biaxially stretched polypropylene film suitable for use in small and high-capacity capacitors. The use of a polypropylene resin with such a weight average molecular weight (Mw) is also preferred because the cast sheet and the biaxially stretched polypropylene film are less likely to have an uneven thickness. The weight average molecular weight (Mw) of the propylene homopolymer is more preferably 270,000 or more, and even more preferably 290,000 or more, from the standpoint of, for example, uniformity in thickness, mechanical characteristics, and the thermomechanical property of the biaxially stretched polypropylene film. The weight average molecular weight (Mw) of the polypropylene resin is more preferably 400,000 or less from the standpoint of flowability of the polypropylene resin, and stretchability at the time the biaxially stretched polypropylene film is formed into an ultra-thin film.
The molecular weight distribution (Mw/Mn) calculated as the ratio of the weight average molecular weight (Mw) to the number average molecular weight (Mn) of the propylene homopolymer is preferably 7 or more and 12 or less. The molecular weight distribution (Mw/Mn) is more preferably 7.3 or more, and even more preferably 7.5 or more. The molecular weight distribution (Mw/Mn) is also more preferably 11 or less, and even more preferably 10 or less. The use of such a propylene homopolymer is preferred because resin flowability suitable for biaxial stretching can be achieved and an ultra-thin biaxially stretched propylene film without unevenness in the thickness can be easily obtained. This polypropylene is also preferred from the standpoint of the voltage resistance of the biaxially stretched polypropylene film.
The weight average molecular weight (Mw) and the number average molecular weight (Mn) of the propylene homopolymer can be measured by gel permeation chromatography (GPC). The GPC instrument for use in GPC is not particularly limited, and a commercially available high-temperature GPC instrument that can analyze the molecular weight of polyolefins, such as a high-temperature GPC instrument with built-in differential refractometer (RI), HLC-8121GPC-HT, manufactured by Tosoh Corporation, can be used. When this instrument is used, measurement is performed, for example, using connected three TSKgel GMHhr-H(20)HT columns for GPC, manufactured by Tosoh Corporation, with the column temperature set to 140°C and trichlorobenzene as an eluent at a flow rate of 1.0 mL/min. A calibration curve is typically created using a polystyrene standard, and a weight average molecular weight (Mw) and a number average molecular weight (Mn) can be determined by conversion with the polystyrene standard.

The melt flow rate (MFR) of the propylene homopolymer contained in the polypropylene resin, which is a blended resin, at 230°C under a load of 2.16 kg is preferably 7 g/10 min or less, more preferably 6 g/10 min or less, and even more preferably 5 g/10 min or less from the standpoint of, for example, the stretchability of the obtained film. From the standpoint of enhancing the thickness precision of the biaxially stretched polypropylene film of the present invention, the MFR is preferably 0.3 g/10 min or more, more preferably 0.5 g/10 min or more, even more preferably 1 g/10 min or more, and particularly preferably 3 g/10 min or more. The MFR can be measured in accordance with JIS K 7210-1999.

Examples of the propylene homopolymer include homopolymers of propylenes, such as isotactic polypropylene and syndiotactic polypropylene, and copolymers of propylene and ethylene. Of these, the propylene homopolymer is preferably an isotactic polypropylene, and more preferably an isotactic polypropylene obtained by homopolymerizing polypropylene in the presence of a catalyst for olefin polymerization, from the standpoint of heat resistance.

The mesopentad fraction ([mmmm]) of the propylene homopolymer is preferably 94% or more and 99% or less. The mesopentad fraction is more preferably 95% or more and 98.5% or less. The use of this propylene homopolymer for the polypropylene resin suitably enhances the crystallinity of the resin due to its suitably high stereoregularity, and enhances initial voltage resistance and long-term voltage resistance. An appropriate solidification (crystallization) rate in forming a cast sheet achieves a desired stretchability.

The mesopentad fraction [mmmm] refers to an index of stereoregularity determined by high-temperature nuclear magnetic resonance (NMR) spectroscopy. Specifically, the mesopentad fraction can be measured by, for example, a JNM-ECP500 high-temperature Fourier transform nuclear magnetic resonance spectrometer (high-temperature FT-NMR; produced by JEOL Ltd.). The observed nucleus is $^{13}C$ (125 MHz), the measurement temperature is 135°C, and the solvent for dissolving the polypropylene resin is o-dichlorobenzene (ODCB: a mixed solvent of ODCB and deuterated ODCB (mixing ratio = 4/1)). High-temperature NMR measurement can be performed, for example, by the method described in "Polymer Analysis Handbook, New Edition, Japan Society for Analytical Chemistry, Research Committee of Polymer Analysis, Kinokuniya Company Ltd., 1995, p. 610."

The measurement mode is single-pulse proton broadband decoupling. The pulse width is 9.1 μsec (45° pulse). The pulse interval is 5.5 sec. The cumulative number of measurements is 4500. The chemical shift standard is $CH_3$ (mmmm) = 21.7 ppm.

A pentad fraction, which represents stereoregularity, is calculated as the percentage of the integrated value of the intensity of each signal derived from a combination of pentads (e.g., "mmmm" or "mrrm") arranged in the same direction (meso (m)) and arranged in different directions (racemo (r)). The assignment of each signal derived from "mmmm," "mrrm," or the like can be determined with reference to, for example, "T. Hayashi, et al., Polymer, Vol. 29, p. 138 (1988)."

The propylene homopolymer can be produced by a known method. Examples of the polymerization method include vapor phase polymerization, bulk polymerization, and slurry polymerization. The polymerization may be single-stage polymerization using one polymerization reactor, or may be multi-stage polymerization using two or more polymerization reactors. Hydrogen or a comonomer as a molecular weight modifier may be added to a reactor to perform polymerization. As a polymerization catalyst, a known Ziegler-Natta catalyst can be used, and the polymerization catalyst may contain a co-catalyst component or a donor. The molecular weight, molecular weight distribution, stereoregularity, etc., of the propylene homopolymer can be controlled by appropriately adjusting the polymerization catalyst and other polymerization conditions.

Ethylene-Propylene Copolymer

When the polypropylene resin is a blended resin, the ethylene-propylene copolymer contained in the polypropylene resin may be any copolymer, such as a random copolymer, a block copolymer, or a graft copolymer. Of these, a random copolymer is preferable.

The content of the ethylene units in the ethylene-propylene copolymer is determined such that the content of the ethylene units is based on the total amount of the propylene units and ethylene units detected from the film. Specifically, the content of the ethylene units in the ethylene-propylene copolymer is preferably more than zero, more preferably 0.05 mol% or more, even more preferably 0.08 mol% or more, and further more preferably 0.1 mol% or more in the ethylene-propylene copolymer. Setting the content of the ethylene units within the numerical ranges above sufficiently brings about the effect due to the contained ethylene copolymer. The content of the ethylene units is preferably 20 mol% or less, more preferably 10 mol% or less, even more preferably 9 mol% or less, and particularly preferably 8 mol% or less.

Setting the content of the ethylene units within the numerical ranges above can suppress the decreases in the melting point of the polypropylene resin and enhance the voltage resistance of the film at high temperatures.

The content of the ethylene units is determined, for example, by using a Fourier transform nuclear magnetic resonance spectrometer (FT-NMR). More specifically, in the present invention, the content of the ethylene units can be measured using a high-temperature FT-NMR VNMRS-400 manufactured by Varian with the observed nucleus being $^{13}C$ (100.6 MHz).

The measurement mode can be inverse gated decoupling, and the chemical shift standard can be pentads of the propylene unit (mmmm) (21.86 ppm).

The content of the ethylene units (mol%) can be calculated from the integrated value of the signal of methylene carbons based on head-to-tail diads with reference to, for example, "Y.-D. Zhang et al., Polym. J. Vol. 35, p. 551 (2003)."

The MFR of the ethylene-propylene copolymer at 230°C under a load of 2.16 kg is preferably 0.1 g/10 min or more and 6 g/10 min or less, more preferably 0.3 g/10 min or more and 5 g/10 min or less, even more preferably 0.3 g/10 min or more and 2 g/10 min or less, and particularly preferably 0.3 g/10 min or more and 1 g/10 min or less, from the standpoint of film formability and fine crystal size.

The melting point of the ethylene-propylene copolymer is preferably 100°C or more, more preferably 110°C or more, even more preferably 120°C or more, and particularly preferably 130°C or more, from the standpoint of enhancing the dielectric breakdown resistance of the obtained film at high temperatures. The melting point of the ethylene-propylene copolymer is also preferably 170°C or less, more preferably 165°C or less, and even more preferably 160°C or less, from the standpoint of enhancing the stretchability of the film.

The crystallization temperature of the ethylene-propylene copolymer is preferably 85°C or more, more preferably 87°C or more, and even more preferably 90°C or more, from the standpoint of, for example, enhancing the dielectric breakdown resistance of the obtained film at high temperatures and enhancing the crystallinity of the resin in the film. The crystallization temperature of the ethylene-propylene copolymer is also preferably 110°C or less, more preferably 108°C or less, and even more preferably 107°C or less, from the standpoint of enhancing the film stretchability.

The melting point and the crystallization temperature of the ethylene-propylene copolymer can be measured using an input compensation-type differential scanning calorimeter (DSC) (Perkin Elmer, Diamond DSC) under the following conditions.

Resin pellets are heated at a temperature increase rate of 20°C/min, and maintained at 280°C for 5 minutes. Subsequently, the pellets are cooled at a temperature decrease rate of 20°C/min, and the crystallization peak at this stage is determined to be the crystallization temperature. Subsequently, the sample is cooled to 30°C, and maintained at the same temperature for 5 minutes, followed by heating again at a temperature increase rate of 20°C/min. The second heating melting peak at this stage can be determined to be the melting point.

The weight average molecular weight (Mw) of the ethylene-propylene copolymer is preferably 250,000 or more and 800,000 or less, and more preferably 450,000 or more and 700,000 or less. The use of such a polypropylene resin can provide effects such as enhancing the uniformity in thickness, mechanical characteristics, and the thermomechanical property of the biaxially stretched polypropylene film.

The molecular weight distribution (Mw/Mn) of the ethylene-propylene copolymer is preferably 3 or more and 12 or less, more preferably 4 or more and 11 or less, even more preferably 5 or more and 10 or less, further more preferably 5 or more and 8 or less, and particularly preferably 5 or more and 6.9 or less. The use of such an ethylene-propylene copolymer is preferable because resin flowability suitable for biaxial stretching can be achieved and an ultra-thin biaxially stretched propylene film without unevenness in the thickness can be easily obtained. This polypropylene is also preferable from the standpoint of the voltage resistance of the biaxially stretched polypropylene film.

The weight average molecular weight (Mw) and the number average molecular weight (Mn) can be measured in the same manner as in measuring the weight average molecular weight (Mw) and the number average molecular weight (Mn) of the polypropylene homopolymer described above.

Blended Resin

When the polypropylene resin is a blended resin, the content of the ethylene-propylene copolymer in the polypropylene resin is preferably 5 to 50 mass%, more preferably about 10 to 45 mass%, even more preferably about 15 to 40 mass%, and particularly preferably about 30 to 40 mass%. Setting 5 mass% or more as the content of the ethylene-propylene copolymer in the polypropylene resin can clearly provide the effect due to the contained ethylene-propylene copolymer. Setting 50 mass% or less can suppress the decreases in heat resistance in film formation, thereby enhancing the dielectric breakdown resistance at high temperatures. When the resin component constituting the polypropylene film of the present invention is a combination of two types of resin components, (1) a propylene homopolymer (which hereinafter may be referred to as "resin (1)") and (2) an ethylene-propylene copolymer (which hereinafter may be referred to as "resin (2)"), the mass ratio of resin (1) to resin (2) (resin (1):resin (2)) is preferably 50:50 to 95:5, more preferably 55:45 to 90:10, even more preferably 60:40 to 85:15, and particularly preferably 60:40 to 70:30. The mass ratio within these numerical ranges can enhance the dielectric breakdown resistance at high temperatures.

The content of the ethylene units in the blended resin is 7.5 mol% or less, preferably 7 mol% or less, and more preferably 6 mol% or less, based on the total amount of propylene units and ethylene units detected from the film. The content of the ethylene units in the polypropylene resin exceeding 7.5 mol% notably lowers the melting point of the obtained film, leading to decreases in the voltage resistance of the film at high temperatures. Even a very small content of the ethylene units in the polypropylene resin can provide a polypropylene film excellent in dielectric breakdown resistance. Specifically, the lower limit of the content of the ethylene units is preferably more than zero, more preferably 0.0001 mol%, even more preferably 0.0005 mol%, further more preferably 0.001 mol%, and still further more preferably 0.005 mol%. The content of the ethylene units is also preferably 4 mol% or less, more preferably 3 mol% or less, even more preferably 2 mol% or less, further more preferably 1 mol% or less, still further more preferably 0.5 mol% or less, and particularly preferably 0.09 mol% or less. In these cases, the haze of the biaxially stretched polypropylene film for capacitors falls within a desirable range, and the element-winding processability is likely to become excellent, with the dielectric breakdown resistance being likely to further improve.

The constituent components of the polypropylene resin for the biaxially stretched polypropylene film for capacitors in this embodiment are particularly preferably a propylene homopolymer and an ethylene-propylene copolymer. Thus, the polypropylene resin is preferably a resin obtained by mixing a propylene homopolymer and an ethylene-propylene copolymer in a dry or molten state. These polymers may be mixed according to any non-limited mixing method, such as a method in which polymerized powder or pellets of a propylene homopolymer and an ethylene-propylene copolymer are dry-blended with a mixer or the like, and a method in which polymerized powder or pellets of a propylene homopolymer and an ethylene-propylene copolymer are melt-kneaded with a kneader to obtain a polypropylene resin.

Film

The melting heat amount of the film is preferably 90 J/g or more, from the standpoint of enhancing the heat resistance and the voltage resistance of the film. The melting heat amount of the film is also more preferably 95 J/g or more, and even more preferably 100 J/g or more. The upper limit of the melting heat amount is 207 J/g based on the theoretical limit of polypropylene crystals. Moreover, from the standpoint of film stretchability, the melting heat amount is preferably 150 J/g or less, more preferably 140 J/g or less, and particularly preferably 120 J/g or less.

The "melting heat amount of the film" can be determined by heating the biaxially stretched film at a temperature increase rate of 20°C/min using an input compensation-type differential scanning calorimeter (DSC)(Perkin Elmer, Diamond DSC) in the same manner as in DSC measurement described above, and calculating the melting heat amount per sample weight from the integrated area of the first heating melting peak during heating.

The crystallite size of the film is preferably 16.3 nm or less, more preferably 16.0 nm or less, and even more preferably 15.0 nm or less from the standpoint of, for example, voltage resistance, dielectric breakdown resistance, and decreases in the leakage current of the obtained film. The use of a polypropylene film with a crystallite size falling within the numerical ranges above does not allow electric current to pass through the crystal (e.g., just like water poorly infiltrates into fine sand), and this morphological effect reduces leakage current. This decreases the occurrence of structural disorder due to Joule heating, thereby achieving excellent heat resistance, voltage resistance, long-term heat resistance, and long-term voltage resistance.

The crystallite size of the film is preferably 10.0 nm or more, more preferably 11.0 nm or more, and even more preferably 12.0 nm or more from the standpoint of maintaining the mechanical strength and melting point of the polypropylene film. The crystallite size of the film is also preferably 16.3 nm or less from the standpoint of maintaining the mechanical strength and melting point of the polypropylene film.

The "crystallite size of the film" refers to the crystallite size calculated from the half width of the reflection peak from (040) plane of $\alpha$-crystal of the polypropylene film measured by a wide angle X-ray diffraction method using the Scherrer's equation. Specifically, the "crystallite size" can be determined as described below. First, a biaxially stretched polypropylene film or a metallized film thereof is subjected to wide angle X-ray diffraction to determine the half width of the obtained diffraction reflection peak from (040) plane of $\alpha$-crystal. Subsequently, from the obtained half width of the diffraction reflection peak from (040) plane of $\alpha$-crystal, the crystallite size is determined using the Scherrer's equation represented by Equation (I) below. Note that, in the present invention, the shape factor constant K is 0.94, and $\lambda$ = 0.15418 nm.

$$D = K\lambda / (\beta \cos\theta) \quad (I)$$

wherein D is a crystallite size (nm), K is a constant (shape factor), $\lambda$ is the X-ray wavelength (nm) that is used, $\beta$ is the half width of a diffraction reflection peak from (040) plane of $\alpha$-crystal, and $\theta$ is a diffraction Bragg angle of (040) plane of $\alpha$-crystal.

More specifically, in the present invention, a desktop X-ray diffraction instrument, MiniFlex 300 (trade name), manufactured by Rigaku Corporation is used to measure the diffraction reflection peak from (040) plane of α-crystal. X-rays generated at an output of 30 kV and 10 mA are used. The CuKα radiation monochromatized by a graphite monochromator (wavelength: 0.15418 nm) is collimated with a slit, and a film to be measured is exposed to the radiation. The diffraction intensity is measured by 2θ/θ continuous scan with a goniometer using a scintillation counter. The half width of the diffraction reflection peak from (040) plane of α-crystal is determined from the obtained data using the integrated X-ray powder diffraction software PDXL included with the instrument as standard equipment.

In the present invention, another resin (which is hereinafter simply referred to as an "other resin"), other than the propylene homopolymer and the ethylene-propylene copolymer described above, may be added in an amount within the range that does not impair the effects of the present invention. Note that the "other resin" is not particularly limited, and known resins suitable for use in capacitors can be appropriately used in the present invention as well. Examples of the other resin include polypropylenes, such as long-chain branched polypropylene and ultra-high-molecular-weight polypropylene; polyolefins composed of olefins such as ethylene, 1-butene, isobutene, 1-pentene, and 1-methyl pentene, and copolymers of the olefins and propylenes; copolymers of α-olefins, such as ethylene-butene copolymers; vinyl monomer-diene monomer random copolymers, such as styrene-butadiene random copolymers; and vinyl monomer-diene monomer-vinyl monomer copolymers, such as styrene-butadiene-styrene block copolymers. The amount of the other resin added is preferably 10 parts by mass or less, and more preferably 5 parts by mass or less, per 100 parts by mass of the polypropylene resin.

The polypropylene film of the present invention may optionally contain at least one type of additive in addition to the polypropylene resin described above. The additive is not particularly limited as long as the additive is typically used in polypropylene resins. Examples of such an additive include stabilizers, such as antioxidants, chlorine absorbers, and ultraviolet absorbers, lubricants, plasticizers, flame retardants, antistatic agents, and colorants. Such an additive may be added to the polypropylene resin in an amount within the range that does not impair the effects of the present invention.

The "antioxidant" is not particularly limited as long as the antioxidant is typically used in polypropylene. The antioxidant is generally used for two purposes. One purpose is to inhibit thermal degradation and oxidative degradation inside an extruder. The other purpose is to inhibit deterioration of a film capacitor during long-term use and contribute to enhancing the capacitor performance. An antioxidant that inhibits thermal degradation and oxidative degradation inside an extruder is referred to as a "primary agent," and an antioxidant that contributes to enhancing the capacitor performance is referred to as a "secondary agent." Two types of antioxidants may be used for these two purposes, or one type of antioxidant may be used for these two purposes.

When two types of antioxidants are used, the polypropylene resin may contain as a primary agent, for example, about 1,000 ppm to 4,000 ppm of 2,6-di-tertiary-butyl-para-cresol (generic name: BHT) based on the amount of the polypropylene resin (100 parts by mass). The antioxidant for this purpose is mostly consumed during a formation step in an extruder and hardly remains in the film after the film formation (the remaining amount is typically less than 100 ppm).

As the secondary agent, a hindered phenol-based antioxidant having a carbonyl group can be used. Although the hindered phenol-based antioxidant having a carbonyl group for use in the present invention is not particularly limited, examples thereof include triethylene glycol-bis[3-(3-tertiary-butyl-5-methyl-4-hydroxyphenyl)propionate] (trade name: Irganox 245), 1,6-hexanediol-bis[3-(3,5-di-tertiary-butyl-4-hydroxyphenyl)propionate] (trade name: Irganox 259), pentaerythrityl-tetrakis[3-(3,5-di-tertiary-butyl-4-hydroxyphenyl)propionate] (trade name: Irganox 1010), 2,2-thio-diethylenebis[3-(3,5-di-tertiary-butyl-4-hydroxyphenyl)propionate] (trade name: Irganox 1035), octadecyl-3-(3,5-di-tertiary-butyl-4-hydroxyphenyl)propionate (trade name: Irganox 1076), and N,N'-hexamethylenebis(3,5-di-tertiary-butyl-4-hydroxy-hydrocinnamide) (trade name: Irganox 1098). Of these, pentaerythrityl-tetrakis[3-(3,5-di-tertiary-butyl-4-hydroxyphenyl)propionate] is most preferable because of its high molecular weight, high compatibility with polypropylene, low volatility, and excellent heat resistance.

The hindered phenol-based antioxidant having a carbonyl group is contained in the polypropylene resin in an amount of preferably 2,000 ppm or more and 7,000 ppm or less, and more preferably 3,000 ppm or more and 7,000 or less, based on the total amount of the polypropylene resin, taking into consideration that the antioxidant is substantially consumed in an extruder.

When the polypropylene resin does not contain the primary agent, the hindered phenol-based antioxidant having a carbonyl group may be added in a larger amount. In this case, because an increased amount of the hindered phenol-based antioxidant having a carbonyl group is consumed in the extruder, the hindered phenol-based antioxidant having a carbonyl group is preferably added in an amount of 3,000 ppm or more and 8,000 ppm or less per 100 parts by mass of the polypropylene resin.

In the present invention, in order to inhibit degradation of the biaxially stretched polypropylene film from proceeding over time during its long-term use, the polypropylene film preferably contains at least one type of the hindered phenol-based antioxidant having a carbonyl group (secondary agent). The content of the secondary agent in the film is preferably 1,000 ppm or more and 6,000 ppm or less, and more preferably 1,500 ppm or more and 6,000 ppm or less, based on the total amount of the polypropylene resin.

A film capacitor that contains an optimal, specific amount of the hindered phenol-based antioxidant having a carbonyl group, which has suitable miscibility with polypropylene on a molecular scale, is preferable because the film capacitor exhibits enhanced long-term durability while maintaining high voltage resistance without reducing electrostatic capacitance (without allowing degradation to proceed) even over a long period of time in a life test at extremely high temperatures.

The "chlorine absorber" is not particularly limited as long as the absorber is typically used in polypropylene. Examples of the chlorine absorber include metal soap, such as calcium stearate.

The "ultraviolet absorber" is not particularly limited as long as the absorber is typically used in polypropylene. Examples of the ultraviolet absorber include benzotriazole (e.g., Tinuvin 328, manufactured by BASF), benzophenone (e.g., Cysorb UV-531, manufactured by Cytec), and hydroxybenzoate (e.g., UV-CHEK-AM-340, manufactured by Ferro).

The "lubricant" is not particularly limited as long as the lubricant is typically used in polypropylene. Examples of the lubricant include primary amides (e.g., stearamide), secondary amides (e.g., N-stearyl stearamide), and ethylene bis amides (e.g., N,N'-ethylene bis stearamide).

The "plasticizer" is not particularly limited as long as the plasticizer is typically used in polypropylene. Examples of the plasticizer include polypropylene random copolymers.

The "flame retardant" is not particularly limited as long as the flame retardant is typically used in polypropylene. Examples of the flame retardant include halogen compounds, aluminum hydroxides, magnesium hydroxides, phosphates, borates, and antimony oxides.

The "antistatic agent" is not particularly limited as long as the antistatic agent is typically used in polypropylene. Examples of the antistatic agent include glycerin monoesters (e.g., glycerin monostearate) and ethoxylated secondary amines.

The "colorant" is not particularly limited as long as the colorant is typically used in polypropylene. Examples of the colorant include cadmium- or chromium-containing inorganic compounds and azo- or quinacridone-organic pigments.

The method for mixing the propylene homopolymer and the ethylene-propylene copolymer for the polypropylene resin for use in the present invention is not particularly limited; however, examples thereof include a method in which resins in the form of powder or pellets are dry-blended with a mixer or the like, and a method in which resins in the form of powder or pellets are melt-kneaded in a kneader to obtain a polypropylene resin.

The mixer to be used is not particularly limited, and a Henschel mixer, ribbon blender, or Banbury mixer, for example, can be used. The kneader to be used is also not particularly limited, and any of a single screw kneader, twin screw kneader, or multi screw kneader with more than two screws can be used. When a twin or multi screw kneader is used, the kneader may be either a kneader with screws that rotate in the same direction or a kneader with screws that rotate in the different directions.

When resins are blended by melt-kneading, the kneading temperature is not particularly limited as long as kneading can be performed well; however, the temperature is typically within the range of about 200 to 300°C, and preferably about 230 to 270°C. Kneading at extremely high temperatures is not preferable because it may degrade the resins. To inhibit the degradation during kneading and mixing of the resins, an inert gas, such as nitrogen, may be used to purge the kneader. The melt-kneaded resin is pelletized into a suitable size with a known pelletizer to obtain mixed polypropylene-starting material resin pellets.

The total ash content originating from the polymerization catalyst residues or the like in the polypropylene resin of the present invention is preferably as small as possible to enhance electrical properties. The total ash content is preferably 200 ppm or less, more preferably 120 ppm or less, and particularly preferably 100 ppm or less, based on the amount of the polypropylene resin (100 parts by mass).

The biaxially stretched polypropylene film of the present invention can be obtained by biaxially stretching the polypropylene resin described above in accordance with an ordinary method. In the present invention, first, a "cast sheet before stretching" for producing the biaxially stretched polypropylene film is preferably formed by a known method. For example, polypropylene resin pellets, dry mixed polypropylene resin pellets and/or powder, or mixed polypropylene resin pellets produced by melt-kneading beforehand (these, hereinafter, may also be referred to as a "polypropylene resin composition") are supplied to an extruder, melt-heated, and allowed to pass through a filter. The polypropylene resin composition is then melt-heated to about 170°C to 320°C, and preferably about 200°C to 300°C, and melt-extruded from a T-die, followed by cooling and solidifying with at least one metal drum maintained at preferably 30 to 140°C, more preferably about 80°C to 140°C, even more preferably about 90°C to 120°C, and particularly preferably about 90°C to 105°C, thereby forming an unstretched cast sheet. The thickness of the cast sheet is preferably about 0.05 mm to 2 mm, and more preferably about 0.1 mm to 1 mm.

The biaxially stretched polypropylene film can be produced by stretching the polypropylene cast sheet. Stretching is performed by biaxial stretching that stretches the film biaxially in longitudinal and lateral directions, and examples of the stretching method include a simultaneous biaxial stretching method and a sequential biaxial stretching method, with the sequential biaxial stretching method being preferred. In the sequential biaxial stretching method, for example, the cast sheet is first maintained at a temperature of preferably about 100 to 180°C (more preferably about 100 to 160°C), and stretched by a factor of 3 to 7 in the machine direction by passing the sheet between rolls that run at different speeds, and the sheet is immediately cooled to room temperature. Subsequently, the stretched film is guided to a tenter and stretched by a factor of about 3 to 11 in the traverse direction at a temperature of 140°C or more (more preferably 160°C or more). Then, the film is relaxed, solidified by heat, and wound. The wound film is subjected to aging treatment at a temperature of about 20 to 45°C, and cut into a desired product width.

The thickness of the biaxially stretched polypropylene film is preferably 1 to 30 $\mu$m, more preferably 1 to 20 $\mu$m, even more preferably 1 to 15 $\mu$m, still more preferably 1 to 7 $\mu$m, particularly preferably 1 to 5 $\mu$m, and most preferably 1 to 3 $\mu$m, from the standpoint of obtaining a small and high-capacity capacitor element. The use of the biaxially stretched polypropylene film having a thickness of 1.5 $\mu$m or more is more preferable. The biaxially stretched polypropylene film for use is also preferably an ultra-thin film, and the thickness thereof is preferably 7 $\mu$m or less, more preferably 5 $\mu$m or less, and particularly preferably 3 $\mu$m or less. The thickness of the film can be measured in accordance with JIS-C2330 using, for example, a paper thickness tester or micrometer (JIS-B7502).

This stretching step can provide a stretched film that has excellent mechanical strength and rigidity with its surface irregularities being further clarified and finely roughened. It is preferable to impart to the surface of the biaxially stretched polypropylene film a suitable surface roughness that results in improving the winding suitability and favorable capacitor properties. The biaxially stretched polypropylene film of the present invention may have either a single-layered structure or a multi-layered structure; however, a single-layered structure is preferable.

At least one side of the biaxially stretched polypropylene film is preferably finely roughened such that the center line average roughness (Ra) is 0.03 $\mu$m or more and 0.08 $\mu$m or less, and that the maximum height (Rz; Rmax as formerly defined in JIS) is 0.3 $\mu$m or more and 0.8 $\mu$m or less. When Ra and Rz fall within the above preferable range, the surface can be finely roughened, and winding wrinkles are less likely to be formed in element-winding processing of capacitor processing, and the film can be preferably wound. Further, the films can be in uniform contact, thereby improving the voltage resistance and the long-term voltage resistance as well.

As used here, "Ra" and "Rz" (Rmax as formerly defined in JIS) refer to values measured by a commonly and widely used stylus-type surface roughness tester (e.g., a stylus-type surface roughness tester using a diamond stylus etc.) according to the method prescribed in, for example, JIS-B0601: 2001. More specifically, "Ra" and "Rz" can be determined, for example, by using a Surfcom 1400D-3DF-12 three-dimensional surface roughness meter (manufactured by Tokyo Seimitsu Co., Ltd.) according to the method prescribed in JIS-B 0601: 2001.

Various known surface-roughening methods, such as embossing and etching, can be used to impart fine irregularities to the film surface. Of these, a surface-roughening method using $\beta$ crystals, which does not require impurities incorporation, is preferable. The proportion of $\beta$ crystals can be typically controlled by adjusting the cast temperature and cast speed. The melting/transformation ratio of $\beta$ crystals can also be controlled by the roll temperature in the longitudinal stretching step. The finely roughened surface properties can be obtained by selecting the optimum production conditions for two parameters, i.e., $\beta$-crystal formation and melting/transformation.

The haze of the biaxially stretched polypropylene film for capacitors in this embodiment is preferably 1.0 to 3.0%. When the haze falls within this range, the surface of the polypropylene film has suitable roughness and smoothness. This gives excellent element-winding processability and is likely to increase the dielectric breakdown resistance. In the measurement of the haze, for example, at several points at regular intervals (e.g., eight points at regular intervals) along the traverse direction (TD direction) of the biaxially stretched polypropylene film for capacitors, the standard deviation $\sigma$ is preferably 0 to 0.2. In this case, the element-winding processability is furhter improved.

The biaxially stretched polypropylene film may be subjected to corona discharge treatment online or offline after completion of the stretching and thermal solidification step, for the purpose of enhancing adhesive properties in a subsequent step, such as a metal deposition processing step. Corona discharge treatment can be performed by a known method. The atmospheric gas for use is preferably air, carbon dioxide gas, nitrogen gas, or a mixture gas thereof.

The biaxially stretched polypropylene film of the present invention can be provided with an electrode on one side or both sides thereof. Examples of the step of providing electrodes include a method in which a metal film (preferably a metal-vapor deposited film) is formed on one side or both sides of the biaxially stretched polypropylene film. Examples of the method for forming a metal-vapor deposited film on the biaxially stretched polypropylene film include vacuum vapor deposition and sputtering. From the standpoint of, for example, productivity and economy, vacuum vapor deposition is preferable. When a metal-vapor deposited film is formed by vacuum vapor deposition, the method for vacuum vapor deposition is suitably selected from known methods including those using a crucible and those using a wire. The metal for use in forming the metal-vapor deposited film may be an elementary metal, such as zinc, lead, silver, chromium, aluminum, copper, and nickel, a mixture or an alloy of two or more of these metals, or the like. From the standpoint of the environment, economy, film capacitor performance, and in particular, temperature characteristics, such as electrostatic capacitance and insulation resistance, and frequency characteristics, the metal for forming the metal-vapor deposited film is preferably an elementary metal selected from zinc and aluminum, or a metal mixture or alloy of these metals.

The film resistance of the metal-vapor deposited film is preferably about 1 to 100 $\Omega/\square$ from the standpoint of the electrical properties of the capacitor. From the standpoint of self healing characteristics, the film resistance is preferably relatively high within this range, more preferably 5 $\Omega/\square$ or more, and even more preferably 10 $\Omega/\square$ or more. From the standpoint of safety as a capacitor element, the film resistance is more preferably 50 $\Omega/\square$ or less, and even more preferably 30 $\Omega/\square$ or less. The film resistance of the metal-vapor deposited film can be measured during metal vapor deposition by, for example, four-terminal sensing known to one skilled in the art. The film resistance of the metal-vapor deposited film can be controlled by adjusting the evaporation amount by conditioning the output of the evaporation source, for example.

When the metal-vapor deposited film is formed on one side of the film, a portion of a predetermined width from one edge of the film is not vapor-deposited to form an insulated margin so that the film becomes a capacitor when wound. In addition, to tightly connect the metallized polypropylene film and the metalicon electrode, a heavy edge structure is preferably formed on the other edge, not the edge with the insulated margin. The film resistance of the heavy edge is typically about 1 to 8 $\Omega/\square$, and more preferably about 1 to 5 $\Omega/\square$. The thickness of the metal film is not particularly limited, but is preferably 5 nm to 200 nm.

The margin pattern of the metal-vapor deposited film to be formed is not particularly limited, but is preferably a pattern including a special margin, such as a fishnet pattern or T-margin pattern, from the standpoint of, for example, safety of the film capacitor. Forming a metal-vapor deposited film in a pattern including a special margin on one side of the biaxially stretched polypropylene film is preferable because it improves the safety of the resulting film capacitor and reduces the breakage and/or short circuit of the film capacitor. The method for forming the margin can be any known method with no restrictions, including a tape method in which masking is done with tape during vapor deposition and an oil method in which masking is done by applying oil.

The biaxially stretched polypropylene film provided with electrodes undergoes a winding process in which the film is wound along its longitudinal direction and processed to a metallized polypropylene film capacitor. Specifically, in the present invention, two metallized polypropylene films produced as described above are laminated such that the metal-vapor deposited film and the polypropylene film are alternately overlaid, and the pair of films is wound. Thereafter, the wound product undergoes the step of forming a pair of metalicon electrodes, one electrode on each edge face thereof, by metal thermal spraying, to prepare a film capacitor element, thereby providing a metallized polypropylene film capacitor.

Capacitor

The biaxially stretched polypropylene film of the present invention can be used for a capacitor.

In the step of preparing a film capacitor element, winding processing of the film is performed. For example, two metallized polypropylene films are laminated such that the metal-vapor deposited portion of the polypropylene film in which a metal has been vapor-deposited and the polypropylene film are alternately overlaid, or additionally such that the insulated margin of each film is located, one on one side, and the other on the other side. The laminated pair of films is then wound. In this step, it is preferable to laminate the two metallized polypropylene films with a shift of 1 to 2 mm. The winder to be used is not particularly limited, and the Automatic Winder 3KAW-N2, manufactured by Kaido Mfg. Co., Ltd., for example, can be used.

In preparing a flat capacitor element, after the winding, the obtained wound product is typically pressed. Pressing helps to tighten the roll of the film capacitor element and/or to form the element. From the standpoint of controlling and/or stabilizing the gap between the layers, the applied pressure is 2 to 20 kg/cm$^2$, although the optimum value varies depending on, for example, the thickness of the polypropylene film.

Subsequently, both edge faces of the wound product are subjected to metal thermal spraying to form metalicon electrodes, thereby preparing a film capacitor element.

The metallized polypropylene film capacitor element is further subjected to a predetermined heat treatment. Specifically, the present invention includes the step of performing heat treatment on the film capacitor element under a vacuum at a temperature of 80 to 125°C for 1 hour or more (which may be, hereinafter, referred to as "heat aging").

In the step of performing heat treatment on the film capacitor element described above, the temperature of the heat treatment is typically 80°C or more, and preferably 90°C or more. Also, the temperature of the heat treatment is typically 130°C or less, and preferably 125°C or less. Performing the heat treatment at a temperature within these numerical ranges can provide the effect of heat aging. Specifically, the gap between the films constituting the capacitor element formed from the metallized polypropylene films decreases, thereby suppressing corona discharge and facilitating the crystallization due to the alteration of the internal structure of the metallized polypropylene films. This appears to result in improving the voltage resistance. A temperature of the heat treatment lower than the predetermined temperature cannot sufficiently achieve the effect of the heat aging. On the other hand, a temperature of the heat treatment higher than the predetermined temperature may cause, for example, pyrolysis or oxidative degradation of the polypropylene films.

The method for performing heat treatment on the film capacitor element can suitably be selected from known methods, such as a method using a thermostatic chamber or a method using high-frequency induction heating in a vacuum atmosphere. In particular, a method using a thermostatic chamber is preferably used.

The time period for performing the heat treatment is preferably 1 hour or more, and more preferably 10 hours or more, from the standpoint of achieving mechanical and thermal stability; however, from the standpoint of preventing defects in molding, such as wrinkles caused by heat and embossing failure, the time period is preferably 20 hours or less.

Lead wires are typically welded to the metalicon electrodes of a film capacitor element that has undergone heat aging. The capacitor element is preferably encapsulated in a case and potted in epoxy resin to impart weatherability to the element and, in particular, to prevent degradation of the element by moisture.

The capacitor element can have a high electrostatic capacitance. In addition, because the capacitor element is produced using the biaxially stretched polypropylene film for capacitors according to this embodiment, the film thickness and haze value, which affect the electrostatic capacitance of elements, show only small variations. This decreases the variations of electrostatic capacitance between multiple capacitor elements (i.e., the standard deviation is small), and enables a stable supply of capacitor elements with a high electrostatic capacitance. The capacitor element obtained by the method of the present invention is a small and high-capacity film capacitor element formed from metallized polypropylene films and has high voltage resistance at high temperatures and long-term durability at high temperatures.

Examples

The present invention will be described in more detail with reference to the Examples; however, these Examples are presented to describe the present invention and do not limit the invention. The symbols "part" and "%" in the Examples respectively represent "part by mass" and "mass%" unless otherwise indicated. The symbol "/" in the molecular weight distribution (Mw/Mn) denotes "divided by," and the symbol "/" in the mass ratio denotes ":" for ratio.

The values of the following physical properties, number average molecular weight (Mn), weight average molecular weight (Mw), molecular weight distribution (Mw/Mn), mesopentad fraction ([mmmm]), melt flow rate (MFR), and content of ethylene units were measured in accordance with the following methods.

Number Average Molecular Weight (Mn), Weight Average Molecular Weight (Mw), and Molecular Weight Distribution (Mw/Mn)

The weight average molecular weight (Mw), number average molecular weight (Mn), and molecular weight distribution (Mw/Mn) of a propylene homopolymer and each copolymer were measured by gel permeation chromatography (GPC) under the following conditions.

Measuring Instrument: high-temperature GPC with built-in differential refractometer (RI), HLC-8121GPC-HT, manufactured by Tosoh Corporation
Columns: connected three TSKgel GMHhr-H(20)HT columns, manufactured by Tosoh Corporation
Column temperature: 140°C
Eluent: trichlorobenzene
Flow Rate: 1.0 mL/min

A calibration curve was created using a polystyrene standard manufactured by Tosoh Corporation, and the weight average molecular weight (Mw) and number average molecular weight (Mn) were determined by conversion with the polystyrene standard. The molecular weight distribution (Mw/Mn) was determined from the values of Mw and Mn. The molecular weight of polypropylene was determined by conversion with a Q-factor.

Measurement of Mesopentad Fraction ([mmmm])

The mesopentad fraction ([mmmm]) was determined using polypropylene dissolved in a solvent with a high temperature Fourier transform nuclear magnetic resonator (high-temperature FT-NMR) under the following conditions.

Measuring Instrument: high-temperature FT-NMR, JNM-ECP500, manufactured by JEOL Ltd.
Observed Nucleus: $^{13}$C (125 MHz)
Measurement Temperature: 135°C
Solvent: ortho-dichlorobenzene .[ODCB: a mixed solvent of ODCB and deuterated ODCB (ODCB/deuterated ODCB=4/1 (molar ratio)] Measurement Mode: single-pulse proton broad-band decoupling Pulse Width: 9.1 $\mu$sec (45° pulse)

Pulse Interval: 5.5 sec
Cumulative Number of Measurements: 4,500
Chemical Shift Standard: $CH_3$ (mmmm) = 21.7 ppm

A pentad fraction, which represents stereoregularity, was calculated as the percentage (%) of the integrated value of the intensity of each signal derived from a combination of pentads (e.g., "mmmm" or "mrrm") arranged in the same direction (meso (m)) and arranged in different directions (racemo (r)). The assignment of each signal derived from "mmmm," "mrrm," or the like was determined with reference to, for example, the spectra disclosed in "T. Hayashi, et al., Polymer, Vol. 29, p. 138 (1988)."

Melt Flow Rate (MFR)

The melt flow rate was measured at a temperature of 230°C under a load of 2.16 kg in accordance with JIS K 7210-1999.

Measurement of Content Of Ethylene Units

The content of ethylene units was determined with a Fourier transform nuclear magnetic resonator (FT-NMR) under the following conditions.
Measuring Instrument: high-temperature FT-NMR, VNMRS-400, manufactured by Varian
Observed Nucleus: $^{13}C$ (100.6 MHz)
Measurement Mode: inverse gated decoupling
Chemical Shift Standard: pentad of propylene units (mmmm) (21.86 ppm)

The content of ethylene units (mol%) was calculated from the integrated value of the signal of methylene carbons based on head-to-tail diads with reference to, for example, "Y.-D. Zhang et al., Polym. J. Vol. 35, p. 551 (2003)."

Melting Point and Crystallization Temperature

The melting point and crystallization temperature were measured with an input compensation-type differential scanning calorimeter (DSC) (Perkin Elmer, Diamond DSC) under the following conditions.
Resin pellets or a film was heated at a temperature increase rate of 20°C/min. The melting heat amount of the film was calculated from the first heating melting peak area during heating. Subsequently, the sample was maintained at 280°C for 5 minutes, and then cooled at a temperature decrease rate of 20°C/min. The crystallization peak at this stage was determined to be the crystallization temperature of the resin pellets. Subsequently, the sample was cooled to 30°C and maintained at this temperature for 5 minutes, followed by heating again at a temperature increase rate of 20°C/min. The second heating melting peak during this heating was determined to be the melting point of the resin pellets.

Polypropylene Resin

Table 1 shows the physical properties of propylene homopolymer 1 (Prime Polymer Co., Ltd.) and propylene homopolymer 2 (Korea Petro Chemical Ind. Co., Ltd.) used in the Examples and Comparative Examples. The values were of propylene homopolymers 1 and 2 in the form of starting material resin pellets and determined in accordance with the methods described above.

Table 1

| | Weight Average Molecular Weight (Mw) (/$10^4$) | Molecular Weight Distribution (Mw/Mn) | Mesopentad Fraction (Mol%) | MFR (g/10 min) |
|---|---|---|---|---|
| Homopolymer 1 | 31 | 8.6 | 97.9 | 4.5 |
| Homopolymer 2 | 34 | 7.5 | 97.9 | 3.4 |

Table 2 shows the physical properties of the copolymers used in the Examples and Comparative Examples.

The values shown in Table 2 were of these copolymers in the form of starting material resin pellets and determined in accordance with the methods described above. The content of ethylene units in Table 2 indicates the content of ethylene units in ethylene-propylene copolymers.

Table 2

| | Content of Ethylene Units (Mol%) | Weight Average Molecular Weight (Mw) (/10^4) | Molecular Weight Distribution (Mw/Mn) | MFR (g/10 min) | Melting Point (°C) | Crystallization Temperature (°C) |
|---|---|---|---|---|---|---|
| Copolymer 1 | 7 | 48 | 5.3 | 0.5 | 139 | 90.7 |
| Copolymer 2 | 0.1 | 63 | 6.8 | 0.3 | 160 | 106.3 |
| Copolymer 3 | 21 | 5 | 0.6 | 6.0 | 103 | - |

Copolymer 1: a propylene-ethylene copolymer (Prime Polymer Co., Ltd.)

Copolymer 2: a propylene-ethylene copolymer (Prime Polymer Co., Ltd.)

Copolymer 3: a propylene-ethylene copolymer (Exxon Mobil Corporation)

Copolymer 4: a 4-methyl-1-pentene-containing copolymer (MX002O, Mitsui Chemicals, Inc.)

Copolymer 5: a propylene-1- butene copolymer (XM7070, Mitsui Chemicals, Inc.)

Example 1

Homopolymer 1 and copolymer 1 were mixed at a mass ratio of homopolymer 1/copolymer 1 = 65/35, and the obtained dry-blended pellets were supplied to an extruder. The dry-blended pellets were melted with heating to achieve a resin temperature of 230°C, extruded through a T-die, and solidified by winding the product on a metal drum with the surface temperature maintained at 45°C, thereby producing a cast sheet having a thickness of about 1 mm. The cast sheet was stretched at a temperature of 165°C in the machine direction by a factor of 5 using a biaxial stretching machine (Karo IV) manufactured by Bruckner, and then immediately stretched by a factor of 10 in the transverse direction, thereby obtaining a biaxially stretched polypropylene film having a thickness of 20 μm.

Example 2

A biaxially stretched polypropylene film having a thickness of 20 μm was obtained in the same manner as in Example 1, except that homopolymer 1 and copolymer 1 were mixed at a mass ratio of homopolymer 1/copolymer 1 = 95/5.

Example 3

A biaxially stretched polypropylene film having a thickness of 20 μm was obtained in the same manner as in Example 1, except that homopolymer 1 and copolymer 1 were mixed at a mass ratio of homopolymer 1/copolymer 1 = 55/45.

Example 4

A film thinner than the film of Example 1 was prepared from dry-blended pellets obtained by mixing homopolymer 1 and copolymer 1 at a mass ratio of homopolymer 1/copolymer 1 = 65/35. First, dry-blended pellets obtained by continuously mixing homopolymer 1 with copolymer 1 were supplied to an extruder. The dry-blended pellets were melted at a temperature of 250°C, extruded through a T-die, and solidified by winding the product on a metal drum with the surface temperature maintained at 92°C, thereby producing a cast sheet having a thickness of about 125 μm. The cast

sheet was stretched at a temperature of 140°C in the machine direction by a factor of 5, and then immediately cooled to room temperature. The sheet was then stretched with a tenter at a temperature of 165°C in the transverse direction by a factor of 10, thereby obtaining a very thin biaxially stretched polypropylene film having a thickness of 2.5 $\mu$m.

Example 5

A biaxially stretched polypropylene film having a thickness of 20 $\mu$m was obtained in the same manner as in Example 1, except that copolymer 1 was replaced by copolymer 2, and that homopolymer 1 and copolymer 2 were mixed at a mass ratio of homopolymer 1/copolymer 2 = 65/35.

Example 6

A film thinner than the film of Example 1 was prepared from dry-blended pellets obtained by mixing homopolymer 1 and copolymer 1 at a mass ratio of homopolymer 1/copolymer 1 = 80/20. First, dry-blended pellets obtained by continuously mixing homopolymer 1 with copolymer 1 were supplied to an extruder. The dry-blended pellets were melted at a temperature of 250°C, extruded through a T-die, and solidified by winding the product on a metal drum with the surface temperature maintained at 92°C, thereby producing a cast sheet having a thickness of about 125 $\mu$m. The cast sheet was stretched at a temperature of 140°C in the machine direction by a factor of 5, and then immediately cooled to room temperature. The sheet was then stretched with a tenter at a temperature of 165°C in the transverse direction by a factor of 10, thereby obtaining a very thin biaxially stretched polypropylene film having a thickness of 2.3 $\mu$m.

Example 7

A film thinner than the film of Example 5 was prepared from dry-blended pellets obtained by mixing homopolymer 1 and copolymer 2 at a mass ratio of homopolymer 1/copolymer 2 = 95/5. First, dry-blended pellets obtained by continuously mixing homopolymer 1 with copolymer 2 were supplied to an extruder. The dry-blended pellets were melted at a temperature of 250°C, extruded through a T-die, and solidified by winding the product on a metal drum with the surface temperature maintained at 92°C, thereby producing a cast sheet having a thickness of about 125 $\mu$m. The cast sheet was stretched at a temperature of 140°C in the machine direction by a factor of 5, and then immediately cooled to room temperature. The sheet was then stretched with a tenter at a temperature of 165°C in the transverse direction by a factor of 10, thereby obtaining a very thin biaxially stretched polypropylene film having a thickness of 2.3 $\mu$m.

Example 8

A biaxially stretched polypropylene film having a thickness of 20 $\mu$m was obtained in the same manner as in Example 1, except that homopolymer 1 was replaced by homopolymer 1 and homopolymer 2, and that homopolymer 1, homopolymer 2, and copolymer 1 were mixed at a mass ratio of homopolymer 1/homopolymer 2/copolymer 1 = 40/25/35.

Comparative Example 1

A biaxially stretched polypropylene film having a thickness of 20 $\mu$m was obtained in the same manner as in Example 1, except that only homopolymer 1 was used as a resin starting material, without using any copolymer.

Comparative Example 2

A biaxially stretched polypropylene film having a thickness of 20 $\mu$m was obtained in the same manner as in Example 1, except that copolymer 1 was replaced by copolymer 3, and that homopolymer 1 and copolymer 3 were mixed at a mass ratio of homopolymer 1/copolymer 3 = 65/35.

Comparative Example 3

A biaxially stretched polypropylene film having a thickness of 20 $\mu$m was obtained in the same manner as in Example 1, except that copolymer 1 was replaced by copolymer 4, and that homopolymer 1 and copolymer 4 were mixed at a mass ratio of homopolymer 1/copolymer 4 = 90/10.

Comparative Example 4

A biaxially stretched polypropylene film having a thickness of 20 $\mu$m was obtained in the same manner as in Example 1, except that copolymer 1 was replaced by copolymer 5, and that homopolymer 1 and copolymer 5 were mixed at a mass ratio of homopolymer 1/copolymer 5 = 65/35.

Table 3 shows the proportions of the homopolymers and copolymers used for producing the biaxially stretched polypropylene films of Examples 1 to 8 and Comparative Examples 1 to 4. The content of ethylene units in the polypropylene resin, thickness, crystallite size, melting heat amount, and dielectric breakdown voltage of the obtained biaxially stretched polypropylene films were evaluated by the following measurement methods. Table 3 shows the results.

Content of Ethylene Units in Polypropylene Resin

The content of ethylene units based on the total amount of propylene units and ethylene units detected from each film was calculated from the homopolymers and copolymers used in each Example or Comparative Example.

Film Thickness

The thickness of each biaxially stretched polypropylene film was measured with a micrometer (JIS-B7502) in accordance with JIS-C2330.

Crystallite Size

The crystallite size of each biaxially stretched polypropylene film was measured with a wide angle X-ray diffractometer (XRD) as described below.

Measuring Instrument: desktop X-ray diffraction (XRD) instrument, MiniFlex 300, manufactured by Rigaku Corporation X-ray Generation Output: 30 kV, 10 mA
Irradiated X-ray: CuK$\alpha$ radiation monochromatized by a monochromator (wavelength: 0.15418 nm)
Detector: Scintillation counter
Goniometer Scanning: 2$\theta$/$\theta$ continuous scan

A diffraction intensity curve was determined from the obtained data using the integrated X-ray powder diffraction software PDXL included with the instrument as standard equipment, and a computer for analysis.

The crystallite size was determined by calculating the half width of the diffraction reflection peak from (040) plane of $\alpha$-crystal. From the calculated half width of the diffraction reflection peak from (040) plane of $\alpha$-crystal, the crystallite size was determined using the Scherrer's equation represented by Equation (I) below. In the present invention, the shape factor constant K is 0.94.

$$D = K\lambda/(\beta\ Cos\theta)\ (I)$$

wherein D is the crystallite size (nm), K is the constant (shape factor), $\lambda$ is the wavelength (nm) of the X rays used, $\beta$ is the half width of the diffraction reflection peak from (040) plane of $\alpha$-crystal, and $\theta$ is the diffraction Bragg angle of (040) plane of $\alpha$-crystal.

Melting Heat Amount

The films were heated at a temperature increase rate of 20°C/min with an input compensation-type differential scanning calorimeter (DSC) (Perkin Elmer, Diamond DSC). The melting heat amount per sample weight was calculated from the integrated area of the first heating melting peak during heating.

Dielectric Breakdown Voltage

The dielectric breakdown voltage was measured at 100°C in accordance with the B method (plate electrode method) of JIS C2330 (2001) 7.4.11.2 using an alternating current power source. The average value of 12 measured dielectric breakdown voltage values ($V_{AC}$) was divided by the thickness ($\mu$m) of the film, and the average value of 8 measured values excluding the topmost 2 values and the bottommost 2 values was determined to be the dielectric breakdown voltage ($V_{ac}/\mu$m).

Haze Measurement

The haze was measured in accordance with JIS-K7136 with a haze meter (Nippon Denshoku Industries Co., Ltd. "NDH-5000").

Measurement of Electrostatic Capacitance of Capacitor Element

Aluminum was deposited at a deposition resistance of 15 $\Omega$ /$\square$ on the biaxially stretched polypropylene film to form a special margin deposition pattern, thereby obtaining a metallized film. After slitting into strips with a small width, two metallized films were overlaid one over the other, and wound 1100 turns with an Automatic Winder 3KAW-N2 manufactured by Kaido Mfg. Co., Ltd. The wound element was then heated at 120°C, while being pressed, and the edge faces of the element were sprayed with zinc metal, thereby obtaining a flat capacitor. This capacitor element was preheated at 105°C, and then the initial electrostatic capacitance before the test was evaluated at room temperature by an LCR Hi-Tester 3522-50 manufactured by Hioki E.E. Corporation.

Table 3

| | Examples | | | | | | | | Comparative Examples | | | |
|---|---|---|---|---|---|---|---|---|---|---|---|---|
| | 1 | 2 | 3 | 4 | 5 | 6 | 7 | 8 | 1 | 2 | 3 | 4 |
| Polypropylene Resin (Mass Ratio) | | | | | | | | | | | | |
| Propylene Homopolymer (1) | | | | | | | | | | | | |
| Homoolymer 1 | 65 | 95 | 55 | 65 | 65 | 80 | 95 | 40 | 100 | 65 | 90 | 65 |
| Homopolymer 2 | | | | | | | | 25 | | | | |
| Ethylene-propylene Copolymer(2) | | | | | | | | | | | | |
| Copolymer 1 | 35 | 5 | 45 | 35 | | 20 | | 35 | | | | |
| Copolymer 2 | | | | | 35 | | 5 | | | | | |
| Copolymer 3 | | | | | | | | | | 35 | | |
| Copolymer 4 | | | | | | | | | | | 10 | |
| Copolymer 5 | | | | | | | | | | | | 35 |
| Thickness (pm) | 20 | 20 | 20 | 2.5 | 20 | 2.3 | 2.3 | 20 | 20 | 20 | 20 | 20 |
| Melting Heat Amount(J/g) | 106.3 | 103.0 | 101.4 | 104.9 | 109.8 | 101.4 | 103.9 | 102.4 | 89.3 | 74.2 | 87.6 | 67.8 |
| Crystallite Size (nm) | 15.6 | 16.3 | 15.9 | 14.8 | 13.5 | 14.7 | 13.0 | 14.2 | 22.8 | 16.0 | - | - |
| The content of ethylene units based on the total amount of propylene units and ethylene units detected from a film (mol%) | 2.5 | 0.4 | 3.2 | 2.5 | 0.04 | 1.4 | 0.005 | 2.5 | - | 7.7 | - | - |
| Dielectric Breakdown Voltage ($V_{AC}$ /μm) | 229 | 227 | 225 | 232 | 228 | 222 | 246 | 228 | 210 | 200 | 186 | 187 |

EP 3 284 777 A1

As shown in Examples 1 to 8, the biaxially stretched polypropylene film of the present invention had excellent dielectric breakdown voltage resistance at a temperature as high as 100°C, revealing its excellent voltage resistance at high temperatures. Even compared with the film produced from a resin composed of only a propylene homopolymer without containing an ethylene-propylene copolymer that lowers the melting point or the crystallization temperature (Comparative Example 1), Examples 1 to 8 exhibited excellent voltage resistance at high temperatures against expectations. In addition, as demonstrated in Examples 4, 6, and 7, ultra-thin films having a thickness of 2.5 μm or 2.3 μm could be produced from the polypropylene resin of the present invention, and the produced films maintained high voltage resistance.

The haze of the film of 5.5 m in the traverse direction of Example 6 was measured at eight points at regular intervals over the entire length in the traverse direction, and the average calculated was 2.1, with the standard deviation σ of the eight points being 0.12. The results indicate that the film obtained in Example 6 had excellent element-winding processability and also that the dielectric breakdown resistance was improved.

Using the film of Example 6, 21 capacitor elements were produced, and the electrostatic capacitance of each element was measured. The average electrostatic capacitance of these elements was 73.9 μF, and the standard deviation σ was 0.33. This indicates that the obtained capacitor elements had excellent electrostatic capacitance with small variations. The results reveal that the biaxially stretched polypropylene film for capacitors in this embodiment can serve as a material suitable for producing capacitor elements having stable properties.

Industrial Applicability

The biaxially stretched polypropylene film for capacitors of the present invention is excellent in dielectric breakdown voltage resistance at high temperatures. Thus, the capacitor produced using this film is expected to exhibit improved voltage resistance at high temperatures, in particular improved initial voltage resistance and long-term voltage resistance. Additionally, because the biaxially stretched polypropylene film for capacitors of the present invention is excellent not only in dielectric breakdown voltage resistance but can also be formed into a thin film, the biaxially stretched polypropylene film is preferably used in small and high-capacity capacitors, which are required to have high voltage resistance.

**Claims**

1. A biaxially stretched polypropylene film for capacitors, comprising a polypropylene resin having ethylene units,

   the content of the ethylene units being 7.5 mol% or less based on the total amount of propylene units and ethylene units detected from the film.

2. The biaxially stretched polypropylene film for capacitors according to claim 1,
   wherein the polypropylene resin contains an ethylene-propylene copolymer, and
   the ethylene-propylene copolymer has a weight average molecular weight (Mw) of 250,000 or more and 800,000 or less.

3. The biaxially stretched polypropylene film for capacitors according to claim 2, wherein the content ratio of the ethylene-propylene copolymer is 5 mass% or more and 50 mass% or less in the polypropylene resin.

4. The biaxially stretched polypropylene film for capacitors according to claim 2 or 3, wherein the ethylene-propylene copolymer has a melting point of 110°C or more and 170°C or less.

5. The biaxially stretched polypropylene film for capacitors according to any one of claims 2 to 4, wherein the ethylene-propylene copolymer has a crystallization temperature of 85°C or more and 110°C or less.

6. The biaxially stretched polypropylene film for capacitors according to any one of claims 1 to 5, wherein the polypropylene film has a melting heat amount of 90 J/g or more.

7. The biaxially stretched polypropylene film for capacitors according to any one of claims 1 to 6, wherein the polypropylene film has a crystallite size of 10.0 nm or more and 16.3 nm or less as determined by the Scherrer's equation from the half width of the reflection peak from (040) plane of α-crystal measured by a wide angle X-ray diffraction method.

8. The biaxially stretched polypropylene film for capacitors according to any one of claims 1 to 7, wherein the biaxially stretched polypropylene film comprises a metal film on one side or both sides thereof.

9. A capacitor obtained using the biaxially stretched polypropylene film for capacitors according to any one of claims 1 to 8.

## INTERNATIONAL SEARCH REPORT

| International application No. |
|---|
| PCT/JP2016/062038 |

A. CLASSIFICATION OF SUBJECT MATTER
*C08J5/18(2006.01)i, H01G4/18(2006.01)i, C08L23/16(2006.01)n*

According to International Patent Classification (IPC) or to both national classification and IPC

B. FIELDS SEARCHED

Minimum documentation searched (classification system followed by classification symbols)
C08J5/18, H01G4/18

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2008-133351 A (Prime Polymer Co., Ltd.), 12 June 2008 (12.06.2008), claims; paragraphs [0001], [0010], [0013] to [0016], [0019], [0027] to [0029]; examples; comparative examples; tables 1, 2 (Family: none) | 1-9 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 July 2016 (04.07.16) | 12 July 2016 (12.07.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

## EP 3 284 777 A1

**INTERNATIONAL SEARCH REPORT**

| International application No. |
| --- |
| PCT/JP2016/062038 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>A | JP 59-171625 A (Mitsui Petrochemical Industries, Ltd.), 28 September 1984 (28.09.1984), claims; page 2, lower right column, lines 1 to 7; page 4, upper left column, line 3 to upper right column, line 17; examples; comparative examples; table 1 & US 4668753 A claims; column 4, lines 13 to 23; column 9, line 64 to column 10, line 33; examples; comparative examples; table 1 & EP 115940 A1 & CA 1216700 A | 1,2,4,5,8,9<br>3,6,7 |
| A | JP 5-51467 A (Mitsui Toatsu Chemicals, Inc.), 02 March 1993 (02.03.1993), entire text (Family: none) | 1-9 |
| A | JP 2006-83253 A (Mitsui Chemicals, Inc.), 30 March 2006 (30.03.2006), entire text (Family: none) | 1-9 |
| A | JP 2014-531480 A (Borealis AG), 27 November 2014 (27.11.2014), entire text & US 2014/0220236 A1 & WO 2013/030210 A1 & EP 2565221 A1 & CN 103764732 A & KR 10-2014-0054348 A | 1-9 |

Form PCT/ISA/210 (continuation of second sheet) (January 2015)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09270361 A
- JP 2014011181 A
- JP 2014011182 A
- JP 2014011183 A
- JP 2006229208 A
- JP S59135209 A
- JP 2002128825 A

**Non-patent literature cited in the description**

- Japan Society for Analytical Chemistry, Research Committee of Polymer Analysis. Polymer Analysis Handbook. Kinokuniya Company Ltd, 1995, 610
- **T. HAYASHI et al.** *Polymer,* 1988, vol. 29, 138
- **Y.-D. ZHANG et al.** *Polym. J. Vol.,* 2003, vol. 35, 551
- **Y.-D. ZHANG et al.** *Polym. J.,* 2003, vol. 35, 551